# EUROPEAN PATENT APPLICATION

(11) **EP 1 860 576 A1**
(43) Date of publication of application: **28.11.2007**
(21) Application number: 06010675.4
(22) Date of filing: 23.05.2006
(51) Int. Cl.: G06F 17/30, G06F 3/023

(54) **Indexing big world lists in databases**

(71) Applicant: Harman Becker Automotive Systems GmbH, 76307 Karlsbad (DE)
(72) Inventor: Gelhar, Jens, 20537 Hamburg (DE)
(74) Representative: Grünecker, Kinkeldey, Stockmair & Schwanhäusser Anwaltssozietät

(57) **Abstract**

The present invention relates to a method for indexing a database, comprising storing at least one data list that comprises at least two sub-lists each comprising at least one sub-list element consisting of a word by storing each sub-list as a separate data entity in the database and separately indexing each sub-list by assigning an index to a sub-list element or a set of sub-list elements, wherein the index comprises at least one character of the sub-list element or of the sub-list elements of the set of sub-list elements. The invention also relates to vehicle navigation system for a vehicle, comprising a database indexed a variant of this method.

## Description

### Field of Invention

The present invention relates to databases, in particular, databases in navigation systems. The invention particularly relates to a method that allows to managing and recognizing efficiently entries in long word lists stored in databases in navigation systems and a system that makes use of this method.

### Background of the Invention

Navigation systems become increasingly prevalent in present-day vehicles, in particular, in mid- and high-class automobiles. The navigation systems perform route guidance to a pre-determined destination input by the user. Both route guidance and operation by the user may be performed verbally by a speech control/recognition system and/or by means of a display device.

Navigation systems comprise relatively huge databases storing lists of entries representing, e.g., cities, streets, points of interest, etc. Such lists become readily very long for practical applications, for example, in the verbal control or the control by a display and cursor or keyboard being part of a vehicle navigation system. Consequently, the lists are difficult to manage given the limited computer resources available in navigation systems.

Current navigation systems allow the user to choose from different entries of lists during separate operation stages. For example, in the route planning state the user is prompted to input a city and then a street name. The input may be performed manually or verbally.

Usually, the lists are presented by displaying entries in alphabetical or lexicographical order. The user may scroll the lists until he finds the desired entry and may, e.g., mark this entry or may directly input a text by a keyboard or a verbal input means or a speech recognition system. If he uses a keyboard, an incremental search performed by the database management system often demands for the input of only the first significant characters of an entire word, e.g., the name of a city the driver wants to be guided to. Following unique characters can automatically be added.

In order to accelerate the selection process of a city and/or a street, after the entry of one or more characters the navigation system may present the user the next characters of stored entries to choose from. As soon as sufficient characters are input in order to uniquely identify a desired list entry, the input string can automatically be completed and the user may be prompted to confirm the identified entry.

In order to allow for fast database operations, in general, as selecting, deleting and updating, proper indexing of the database is indispensable. Indexing may also serve for sorting the data entries in lists. In standard relational databases, indices are transparent to the application, i.e. during index-supported search the indexed data contents cannot be accessed by the software run on the computer facility of the navigation system.

The indices are usually implemented for a tree-structure search assuming a pre-defined sort order of the managed data. Alternatively, the indexing itself can establish a sort order. Any search for an entry of a list is performed in accordance with the implemented tree-structure. The indices range over all elements of a particular data class representing, e.g., the entire set of city names or street names. Reference to sub-sets of the street names, say street names corresponding to a particular city, can be made by means of two-dimensional (columns) indices (column indexing). The first columns of an index may represent a city and the second on a street. Multi-column indices range over the entirety of data elements (list entries) stored as different data types.

The set of characters that can, in principle, follow a partial string that has already been input as mentioned above can be calculated on-line from the stored lists by means of the indices. Alternatively, this set may be calculated and stored in a tree-structure in advance and accessed whenever necessary.

However, the conventional indexing leads to a huge data structure for each index that has to range over the entire data stored in the database. Therefore, if the computer and storage resources are rather limited, as it is the case in the navigation systems, it is often not possible to download the entire index in the main memory. Information about possible characters following a partial string input requires additional storage capacities, in particular, virtual memory and memory swapping. Access to these additional storage capacities during runtime leads to an extensive computational load accompanied by delays of the processing and sometimes even to an unacceptable customer waiting time.

Thus, there is a need for an improved method and system for indexing entries in long lists that allow for a reliable and fast matching of entries in lists. Moreover, there is a need for a method for managing and recognizing entries in long lists that works effectively, even if relatively limited computer resources are available, as it is the case in embedded systems, in particular, vehicle navigation systems.

### Description of the Invention

This above-mentioned problem is solved by the method for indexing a database according to claim 1, the method comprising

Method for indexing a database, comprising
storing at least one data list that comprises at least two sub-lists each comprising at least one sub-list element consisting of a word by storing each sub-list as a separate data entity in the database; and
separately indexing each sub-list by assigning an index to a sub-list element or a set of sub-list elements, wherein the index comprises at least one character of the sub-list element or of the sub-list elements of the set of sub-list elements.

The sub-list elements are words consisting of characters. Characters may be letters, numbers or other symbols and special characters as, e.g., can be found on keyboards.

Division of the data list in sub-lists can be arbitrary or based on, e.g., identical initial strings of sub-list elements.

Different from the art, according to the disclosed method the employed indices represent visible components of the list structure that are directly used for the determination of the next character(s) that can be input by the user in order to uniquely identify a sub-list element or a set of sub-list elements. In the art, information on possible next character inputs must be stored separately. Moreover, the sub-lists are stored as separate entities and each sub-list is indexed separately by the respective indices. Thus, different from the indices have not to extend over different columns of data tables. Furthermore, the indices can be designed for sub-lists used for a specific application which also results in much smaller indices as compared to indices of conventionally indexed databases.

Consequently, the identification of entries in big lists is accelerated as compared to the art. In particular, in the present invention an index does not extends over the entire data of the database and, thus, represents a relatively small data entity that can be accessed and used for the search of the desired data entry, i.e. a sub-list element, very fast and efficiently with a relatively low processor load.

In particular, the entire database memory requirements are reduced as compared to the art, since the indices assigned to sub-list elements may preferably consist of sub-strings of the sub-list elements rather than full text representations. In embedded systems, as navigation systems including a database indexed by the inventive method, thus, loading of indices might be facilitated in the first place.

It may be preferred that at least some of the indices for each sub-list, in particular, all of the indices, comprise only one or more initial characters of the respective sub-list element, e.g., the first two characters of a word consisting of five characters. Usually, this allows for the most convenient way of offering possible further characters of a sub-list element that might be chosen by a user.

According to an embodiment of the inventive method at least one sub-list is divided into parts comprising at least one sub-list element and each part of the at least one sub-list is assigned a respective unique name comprising a predetermined number of initial characters of the elements of the part of the sub-list; and wherein
the indexing of the database comprises assigning an index to each part of the at least one sub-list comprising or consisting of at least one character of the name of the respective part of the sub-list.

For example, a sub-list may be assigned the sub-list name "Ab" and comprise three further sub-lists named "Abcd", "Abce" and "Abd", respectively. According to this example, after an input of "Abc" only the sub-list names "Abcd" and "Abce" are offered to a user for a continued input.

The indices preferably represent a tree structure representing possible characters to be input by a user of the database. Implementation of indices in search tree structures is an efficient and reliable way of implementation. The root of the tree branches for the first allowable input character. Further branches correspond to additional discriminating characters that can be input by a user. On the other hand, the tree branches are associated with sub-lists and parts of sub-lists.

Search for a data entry, i.e. a predetermined data position is performed along the tree structure. The tree comprises branches and leaves and the branches to be chosen during a search are determined by comparison of searched data entries with comparative values stored in the tree structure as known in the art (see also detailed description below as well as the above-mentioned example of sub-list names). Contrary, to the art, however, the comparative values may preferably not be complete data entries of entire database but rather initial characters of such data entries. An input of, e.g., "ABC" may, thus, result in a further search along branches "ABCD" and "ABCDE".

The tree structure may also comprise data on the number of parts of a sub-list and/or sub-list elements (i.e. words) matching a character string input by a user of the database. If the number of sub-list elements matching a character string input by a user lies below a predetermined threshold, all sub-list elements can be displayed to a user.

After one or more branching the tree structure ends up in leaves. Each branching may logically correspond to one next character that can possibly be input by a user. According to an embodiment of the inventive method each leave of the tree structure refers to one sub-list element matching a character string input by a user or refers to a starting point for calculating the one sub-list element matching the character string input by the user. If all leaves refer to a respective sub-list element, the tree structure completely represents all possible input strings composed of allowable characters, as, e.g., letters, numbers etc. In this case, a very fast access to the desired data entry is allowed.

Alternatively, the tree structure at least in some branches may end with a reference to starting point at which the remaining possible input characters are calculated in real time. This alternative saves memory space but should only be applied for not too many remaining input options in order not to result in an undesired heavy processor load.

According to a further embodiment of the herein disclosed method for indexing a database each leave of the tree structure refers to a set of words as sub-list elements matching a character string input by a user or refers to a starting point for calculating the set of sub-list elements matching the character string input by the user. The, thus, determined sub-set can be displayed to the user to choose a sub-list element from.

The at least one data list of the database to be indexed with an example of the method disclosed herein may comprise at least two sub-lists in alphabetical or lexicographical order and/or the at least one sub-list comprises words as sub-list elements in alphabetical or lexicographical order. Sorting in lexicographical order can represent an example for a set of sub-list elements that comprises sub-list elements from different other sub-lists.

The disclosed method is particularly useful for embedded systems with restricted computer resources, as, e.g., for navigation systems of vehicles comprising navigation databases. When applied to navigation databases, in particular, the input for navigation systems installed in automobiles, at least some of the sub-list elements are names of a country, or a city or a street.

It is also provided a computer program product, comprising one or more computer readable media having computer-executable instructions for performing the steps of the method for indexing a database according to one of above discussed examples.

The present invention, furthermore, provides a vehicle navigation database indexed by the method for indexing a database according to one of above discussed examples as well as a vehicle navigation system for a vehicle, comprising such a database, an input means configured to allow for an input, in particular, of a navigation destination, control means configured to access the database in response to the input and to retrieve data from the database and an output means configured to output at least one character on a display and/or to output an acoustic or verbal message in response to the input performed by the input means and on the basis of the data retrieved from the database.

The thus indexed database allows for a fast access to a name of a destination stored in a data list (as, e.g., a city or a street) and to be chosen by a user of the navigation system.

Additional features and advantages of the invention will be described with reference to the drawings. In the description, reference is made to the accompanying figures that are meant to illustrate preferred embodiments of the invention. It is understood that such embodiments do not represent the full scope of the invention that is defined by the claims given below.

Figure 1 illustrates an example of the method for indexing a database wherein the sub-list elements are sorted in alphabetical order.

Figure 2 illustrates an example of the method for indexing a database wherein the sub-list elements are sorted in lexographical order.

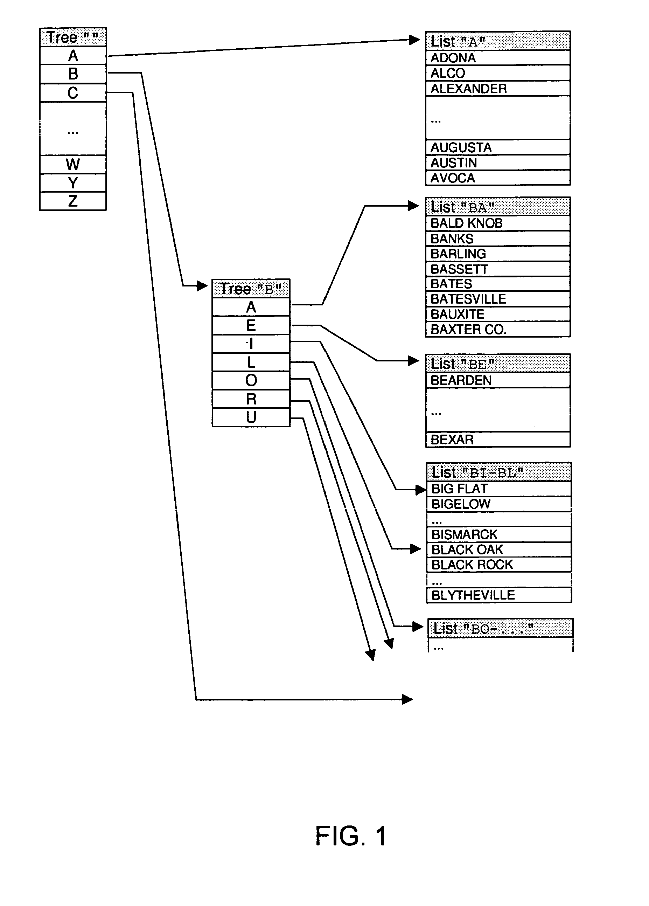

An example of the inventive method is described with reference to Fig. 1. A complete data list to be stored in a database is divided into multiple lists (sub-lists), The sub-lists are divided into parts of a predetermined length. For example, each of the parts of the sub-lists may not comprise more than 50 elements. According to the present example of the present invention, the data list is indexed by an index structure representing some of possible first characters to be input by a user. Each sub-list is indexed separately. A typical sub-list may comprise all names of cities of a particular country or all street names of a particular city.

In the case of a navigation database installed in a vehicle navigation system a user may input a navigation destination. For this purpose, he may choose an entry from a displayed list by common techniques as spelling of characters, automatic adding of unique characters and scrolling through displayed data listings.

The indices represent a tree structure according to the possible input of characters. The root of the tree, as shown on the left hand side of Fig. 1, branches in accordance with possible input characters, which, in this example are, all letters with the exception of "X". Each branch of the tree comprising all possible next characters following the present input represents a definite stage of a spelled input string. In the considered example, a user chooses "B" as a first input character. The tree branches for "B" according to possible second characters that may be input, namely, "A", "E", "I", "L", "O", "R" and "U".

The indices assigned to names of parts the considered sub-list comprise "BA", "BE", etc. The tree structure ends with a direct reference to the first sub-list element as soon as the number of sub-list elements is below 50 (as it is the case for an initial character of "A" in Fig. 1). When the user inputs "BA", he is displayed the part of the list entitled List "BA" in Fig. 1 and he may choose, e.g., Baxter Co by a cursor or spelling, etc. In this example, the sub-list elements are sorted in alphabetical order.

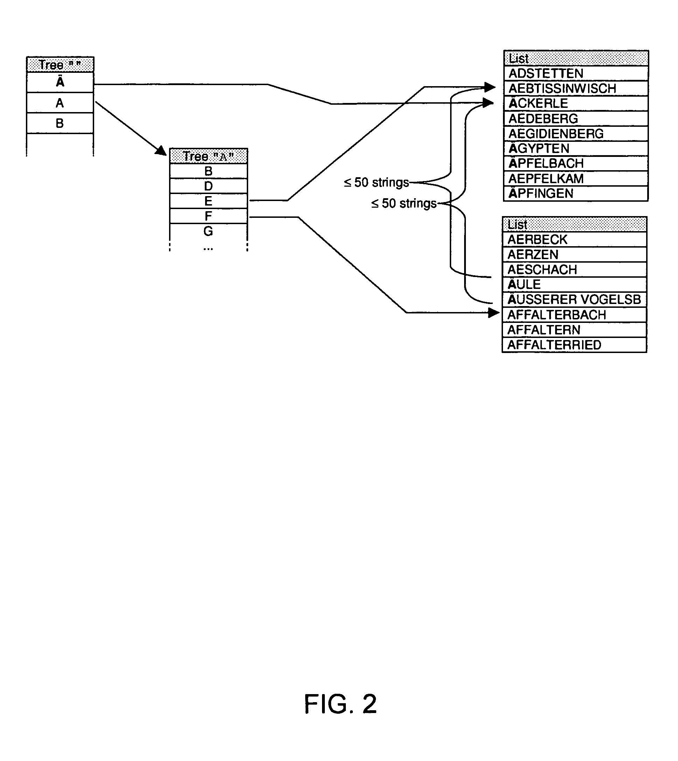

Fig. 2 illustrates an indexing tree structure for a list that is sorted in a lexicographical manner. In the present, example the German umlaut "Ä" is sorted equal to the character string "AE". This implies that strings with an "Ä" are mixed with those strings containing an "A" at the same position. In this case also, the tree ends as soon as the number of all possible sub-list elements that are constricted at previous stages (branches of the tree) is below a predetermined number, say, 50. Since in the present example only six (≤ 50) (sub-) list elements with an initial letter "Ä" are present, direct reference to elements starting with an "A" is made, if an initial string "Ä" is input by a user.

In other words, the input character "Ä" is linked to a list leaf that contains all list elements with names starting with "Ä". If, however, much more strings with an initial "AE" were present in the data list it might be preferred to modify the indexing structure by introducing a branch node for "Ä", even though there are still only six matches for an initial string "Ä".

It should be noted that other kinds of sorting schemes for the (sub-) list elements might be employed.

The previously discussed examples are not intended as limitations but serve as examples illustrating features and advantages of the invention. It is to be understood that some or all of the above described features can also be combined in different ways.

## Claims

1. Method for indexing a database, comprising
storing at least one data list that comprises at least two sub-lists each comprising at least one sub-list element consisting of a word by storing each sub-list as a separate data entity in the database; and
separately indexing each sub-list by assigning an index to a sub-list element or a set of sub-list elements, wherein the index comprises at least one character of the sub-list element or of the sub-list elements of the set of sub-list elements.

2. Method according to claim 1, wherein at least some of the indices assigned to the sub-list elements consist of at least one character of the sub-list elements and less than all of the characters of the sub-list elements.

3. Method according to claim 2, wherein at least some of the indices assigned to the sub-list elements consist of one or more initial characters of the sub-list elements.

4. Method according to one of the preceding claims, wherein
at least one sub-list is divided into parts comprising at least one sub-list element and each part of the at least one sub-list is assigned a respective unique name comprising a predetermined number of initial characters of the elements of the part of the sub-list; and wherein
the indexing of the database comprises assigning an index to each part of the at least one sub-list comprising or consisting of at least one character of the name of the respective part of the sub-list.

5. Method according to one of the preceding claims, wherein the indices represent a tree structure representing possible characters to be input by a user of the database.

6. Method according to claim 5, wherein the tree structure comprises comparative values at branches of the tree representing initial characters of elements and/or names of parts of sub-lists.

7. Method according to one of the claims 5 or 6, wherein each leave of the tree structure refers to one sub-list element matching a character string input by a user or refers to a starting point for calculating the one sub-list element matching the character string input by the user.

8. Method according to one of the claims 5 or 6, wherein each leave of the tree structure refers to a set of sub-list elements matching a character string input by a user or refers to a starting point for calculating the set of sub-list elements matching the character string input by the user.

9. Method according to one of the preceding claims, wherein the at least one data list comprises at least two sub-lists in alphabetical or lexicographical order and/or the at least two sub-lists comprise sub-list elements in alphabetical or lexicographical order.

10. Method according to one of the preceding claims, wherein at least some of the sub-list elements are names of a country, or a city or a street.

11. Method according to claim 10, wherein the database is a navigation database for a vehicle navigation system.

12. Computer program product, comprising one or more computer readable media having computer-executable instructions for performing the steps of the method for indexing a database according to one of the preceding claims.

13. Vehicle navigation database indexed by the method for indexing a database according to claim 10.

14. Vehicle navigation system for a vehicle, comprising
a database indexed by the method according to claim 10;
an input means configured to allow for an input, in particular, an input of a navigation destination;
a control means configured to access the database in response to the input and to retrieve data from the database; and
an output means configured to output at least one character on a display and/or to output an acoustic or verbal message in response to the input and on the basis of the data retrieved from the database.
